# FASCICULE DE BREVET EUROPEEN

(11) **EP 0 297 012 B1**
(45) Date de publication et mention de la délivrance du brevet: **15.09.1993**
(21) Numéro de dépôt: 88440051.6
(22) Date de dépôt: 23.06.1988
(51) Int. Cl.: A01D 34/76

(54) **Faucheuse rotative**
Mähmaschine
Rotary mower

(30) Priorité: 26.06.1987 FR 8709182
(43) Date de publication de la demande: 28.12.1988
(73) Titulaire: KUHN S.A., F-67700 Saverne (FR)
(72) Inventeur: Frumholtz, Johnny, F-67700 Saverne (FR); Helfer, Roland, F-67450 Lampertheim (FR)

(56) Documents cités:
- EP-A- 0 116 661
- EP-A- 0 163 587
- EP-A- 0 184 533
- DE-A- 3 527 903
- FR-A- 2 110 911
- FR-A- 2 226 101
- FR-A- 2 376 610
- FR-A- 2 562 758
- GB-A- 1 201 938
- GB-A- 2 022 382
- GB-A- 2 043 421
- US-A- 2 429 492
- US-A- 2 753 674

## Description

La présente invention concerne une faucheuse comportant un châssis, des roues liées de manière articulée au châssis par des bras de roue de manière à pouvoir être déplacées par rapport audit châssis en vue d'éloigner ou de rapprocher ledit châssis du sol, un timon permettant d'atteler la faucheuse à un véhicule tracteur, ledit timon étant lié au châssis par une articulation d'axe dirigé vers le haut, un dispositif de coupe comportant deux groupes d'organes de fauchage comportant chacun des organes de fauchage guidés autour d'axes dirigés ver le haut dans un carter s'étendant sous lesdits organes de fauchage et contenant une partie des organes d'entraînement de ceux-ci, ledit dispositif de coupe étant lié de manière articulée au châssis en vue de son adaptation au sol, et des moyens de transmission transmettant le mouvement depuis une source motrice jusqu'aux organes d'entraînement de chaque groupe d'organes de fauchage et comportant notamment un carter d'entrée disposé sensiblement au milieu du châssis considéré transversalement à la direction de travail et des moyens de distribution du mouvement distribuant le mouvement du carter d'entrée aux organes d'entraînement.

On connait par le document EP-A-0 163 587 une telle faucheuse dont les deux groupes d'organes de fauchage sont chacun liés au châssis par des bras s'étendant sensiblement horizontalement vers l'arrière à partir du groupe d'organes de fauchage correspondant. A leur extrémité arrière, ces bras sont chacun liés au châssis par une artaiculation d'axe horizontal dirigé transversalement à la direction de travail. Grâce à ce mode de liaison, chaque groupe d'organes de fauchage peut individuellement s'adapter aux configurations du sol sur lequel il glisse en pivotant autour de l'axe horizontal dirigé transversalement à la direction de travail.

L'entraînement des deux groupes d'organes de fauchage est notamment réalisé par un carter d'entrée s'étendant à un niveau supérieur dont le mouvement est distribué à chaque groupe d'organes de fauchage par des moyens de distribution s'étendant à un niveau inférieur. Ces moyens de distribution comportent notamment un carter à double sortie s'étendant au niveau de l'axe horizontal autour duquel pivotent les groupes d'organes de fauchage en vue de leur adaptation au sol. Chaque sortie de ce carter est couplée aux organes d'entraînement du groupe d'organes de fauchage respectif. Ces organes d'entraînement comportent un arbre disposé concentriquement à l'axe horizontal dirigé transversalement à la direction de travail lié en rotation par l'intermédiaire d'un couple de roues dentées coniques à un arbre logé dans l'un au moins des bras liant le groupe d'organes de fauchage au châssis. Ce dernier arbre entraîne ensuite des roues dentées logées sous les organes de fauchage.

Ce mode de liaison des groupes d'organes de fauchage au châssis et ce mode d'entraînement desdits groupes d'organes de fauchage présentent des inconvénients.

En effet, cette construction nécessite tout d'abord l'agencement d'un organe de transport du produit coupé par les organes de fauchage afin que ledit produit ne puisse pas rester accroché à l'élément de châssis supportant à articulation les groupes d'organes de fauchage et contenant partiellement les organes d'entraînement desdits groupes d'organes de fauchage. Ceci renchérit la faucheuse.

Cette construction nécessite ensuite l'agencement de moyens empêchant l'accrochage de produit coupé aux moyens de distribution du mouvement s'étendant entre le carter d'entrée et les organes d'entraînement des groupes d'organes de fauchage. Ces moyens sont disposés dans le flux de produit devant les moyens de distribution du mouvement et divisent ledit flux de produit en deux flux passant chacun de part et d'autre desdits moyens de distribution du mouvement. La faucheuse laisse ainsi dans son sillage deux andains séparés de produit coupé, ce qui n'est souvent pas souhaité.

Enfin, du fait que les deux groupes d'organes de fauchage ne sont pas liés directement l'un à l'autre et peuvent donc se débattre librement l'un par rapport à l'autre, il peut arriver qu'à l'endroit situé entre les deux groupes d'organes de fauchage, il apparaisse deux zones dans lesquelles les pieds végétaux restant après la coupe ont des hauteurs différentes car l'un des groupes d'organes de fauchage aura travaillé plus haut que l'autre. Ceci n'est pas non plus souhaité.

La présente invention a pour but de rémédier aux inconvénients de cette faucheuse connue.

A cet effet, la faucheuse selon la présente invention est caractérisée par la combinaison de moyens suivants :
- les deux groupes d'organes de fauchage sont liés rigidement l'un à l'autre,
- le dispositif de coupe est lié au châssis par un dispositif à quadrilatère déformable,
- les organes d'entraînement de chaque groupe d'organes de fauchage comportent un carter de renvoi s'étendant au-dessus de l'organe de fauchage situé à l'extrémité extérieure du groupe d'organes de fauchage correspondant, et
- les moyens de distribution du mouvement de chaque groupe d'organes de fauchage comportent un arbre de distribution à joints universels amenant le mouvement au carter de renvoi dudit groupe d'organes de fauchage.

Grâce à l'agencement selon la présente invention, les inconvénients qui affectent la faucheuse de grande largeur de l'art antérieur sont supprimés.

En effet, du fait que les deux groupes de fauche sont liés rigidement l'un à l'autre, il n'apparait plus de zones présentant des pieds coupés à des hauteurs différentes entre les deux groupes d'organes de fauchage.

Compte tenu ensuite du mode de liaison du dispositif de coupe au châssis, il s'ensuit qui ledit dispositif de coupe comporte une bien meilleure adaptation au sol. La qualité du fauchage s'en trouve ainsi améliorée. En sus, le dispositif de coupe est également bien moins sensible aux obstacles qu'il peut rencontrer lors du fauchage. Le dispositif à quadrilatère déformable autorise en effet au dispositif de coupe une grande trajectoire dégageante qui permet audit dispositif de coupe de surmonter aisément un obstacle.

Enfin l'agencement particulier des organes d'entraînement des organes de fauchage qui comportent un carter de renvoi s'étendant au-dessus de l'organe de fauchage situé à l'extrémité extérieure du groupe d'organes de fauchage correspondant, et des moyens de distribution du mouvement de chaque groupe d'organes de fauchage sous forme d'arbre de distribution à joints universels permet d'entraîner de manière optimale le dispositif de coupe et ceci dans toutes les positions qu'autorise le dispositif à quadrilatère déformable audit dispositif de coupe.

Grâce au mode particulier de réalisation de la liaison du dispositif de coupe au châssis et de l'entraînement dudit dispositif de coupe, il est possible de construire une faucheuse de grande largeur de coupe ne nécessitant pas d'organe de transport du produit coupé pour éviter que celui-ci ne reste accroché à un élément de châssis, ni de moyens empêchant l'accrochage de produit coupé aux moyens de distribution du mouvement. En sus, la faucheuse selon l'invention permet de réaliser un seul andain ce qui est avantageux à plusieurs égards.

Avantageusement le dispositif à quadrilatère déformable est un dispositif à quadrilatère déformable tiré.

Préférentiellement, ce dispositif à quadrilatère déformable est au moins sensiblement un dispositif à parallélogramme déformable.

La faucheuse selon l'invention est particulèrement maniable lorsque d'une manière connue en soi, l'articulation liant le timon au châssis est disposée sensiblement au milieu du châssis considéré transversalement à la direction de travail.

Grâce à cette caractéristique, la faucheuse peut être construite de telle sorte à pouvoir travailler indifféremment à droite ou à gauche du véhicule tracteur.

Selon un premier mode de réalisation, le carter d'entrée est composé de deux parties, une première partie liée au timon et une deuxième partie liée au châssis, les deux parties pouvant tourner l'une par rapport à l'autre autour d'un axe confondu avec l'axe de l'articulation liant le timon au châssis. Dans ce mode de réalisation, la partie liée au timon pourra tourner par rapport à la partie liée au châssis sans risquer d'endommager les organes de transmission logés dans le carter d'entrée.

Selon un deuxième mode de réalisation, les moyens de transmission comportent notamment un arbre de transmission. Le carter d'entrée quant à lui comporte un arbre d'entrée et est uniquement lié au châssis. La liaison entre ledit arbre de transmission et ledit arbre d'entrée est réalisée par un joint universel dont l'axe est sensiblement confondu avec l'axe de l'articulation liant le timon au châssis. Avantageusement, ledit joint universel est un joint homocinétique.

Selon un troisième mode de réalisation, le carter d'entrée est uniquement lié au timon. Dans ce cas, il sera particulièrement avantageux que du côté du carter d'entrée, chaque arbre de distribution à joints universels comporte un joint homocinétique.

Dans ces deux derniers modes de réalisation, le carter d'entrée ne comporte qu'une seule partie.

Pour des faucheuses de largeur de coupe relativement grande, il sera avantageux, afin de réduire ou de supprimer les battements auxquels pourraient être soumis les arbres de distribution à joints universels, que les moyens de distribution du mouvement d'un groupe d'organes de fauchage comportent en sus un arbre de prolongation qui est accouplé à l'une de ses extrémités au carter d'entrée et qui est guidé en rotation au moins près de l'autre de ses extrémités dans un palier solidaire du châssis, l'arbre de distribution à joints universels respectif s'étendant entre cette dernière extrémité de l'arbre de prolongation et le carter de renvoi du groupe d'organes de fauchage correspondant.

Dans l'invention, il pourra être prévu d'agencer après les organes de fauchage des organes de traitement du produit coupé tel que des organes d'andainage, de conditionnement ou autres.

D'autres caractéristiques de l'invention sont contenues dans les autres sous-revendications et dans la description ci-dessous de plusieurs exemples de réalisation non limitatifs de l'invention se référant aux dessins annexés sur lesquels :
- la figure 1 montre en vue de dessus une faucheuse selon l'invention, attelée à un tracteur agricole,
- la figure 2 montre une vue de devant suivant la flèche II définie sur la figure 1, du corps de la faucheuse selon la figure 1, partiellement en coupe suivant le plan II-II sur la figure 3
- la figure 3 montre une vue de côté suivant la flèche III définie sur la figure 2, du corps de la faucheuse des figures 1 et 2,
- la figure 4 montre une vue de dessus suivant la flèche 4 définie sur la figure 2, du corps de la faucheuse des figures 1 à 3 (le timon a été représenté en position médiane),
- la figure 5 montre schématiquement en vue de devant un autre exemple de réalisation des moyens de distribution du mouvement,
- la figure 6 montre schématiquement en vue de coté un deuxième exemple de réalisation du carter d'entrée,
- la figure 7 montre schématiquement en vue de devant un troisième exemple de réalisation du carter d'entrée, et
- la figure 8 montre schématiquement en vue de coté, le carter d'entrée de la figure 7.

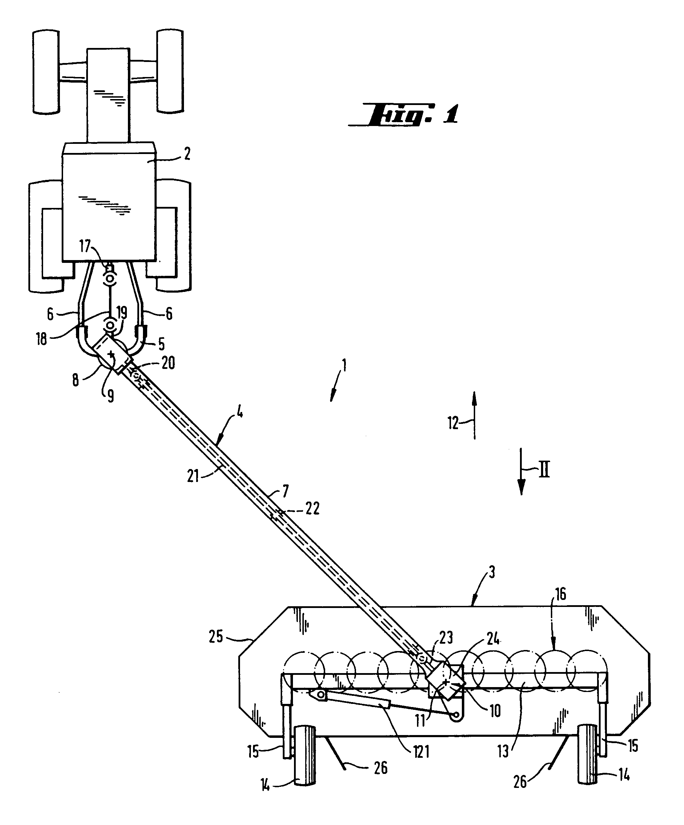

Sur la figure 1, on voit une faucheuse (1) selon l'invention accouplée à un tracteur (2).

La faucheuse (1) se compose d'un corps (3) et d'un timon (4). Le timon (4) se compose d'un timon primaire (5) destiné à être lié aux bras inférieurs (6) de l'attelage du tracteur (2) et un timon secondaire (7) lié au corps (3) de la faucheuse (1). Le timon primaire (5) est lié à la partie frontale du timon secondaire (7) par un dispositif de liaison (8) connu de l'homme de l'art et qui autorise notamment un pivotement du timon primaire (5) par rapport au timon secondaire (7) autour d'un axe (9) dirigé vers le haut. A sa partie arrière, le timon secondaire (7) est lié au corps (3) par une articulation (10) d'axe (11) dirigé vers le haut et s'étendant sensiblement au milieu du corps (3) vu transversalement à la direction de travail (12). La position du timon (4) par rapport au corps (3) peut être réglée en faisant pivoter le timon (4) autour de l'axe (11) de l'articulation (10). Le réglage de la position souhaitée et le maintien dans la position souhaitée sont réalisés par un organe de commande et de blocage (121) (un vérin hydraulique dans l'exemple représenté). Grâce à cet agencement, le corps (3) de la faucheuse (1) peut s'étendre - vu de l'arrière dans la direction de travail (12) - soit à droite, soit à gauche du tracteur (2). Ceci autorise le fauchage en aller et retour.

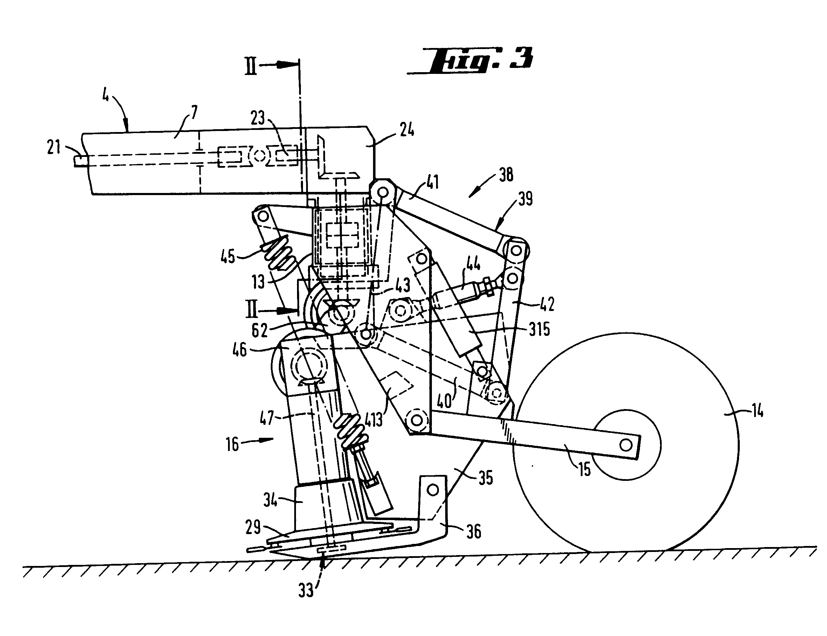

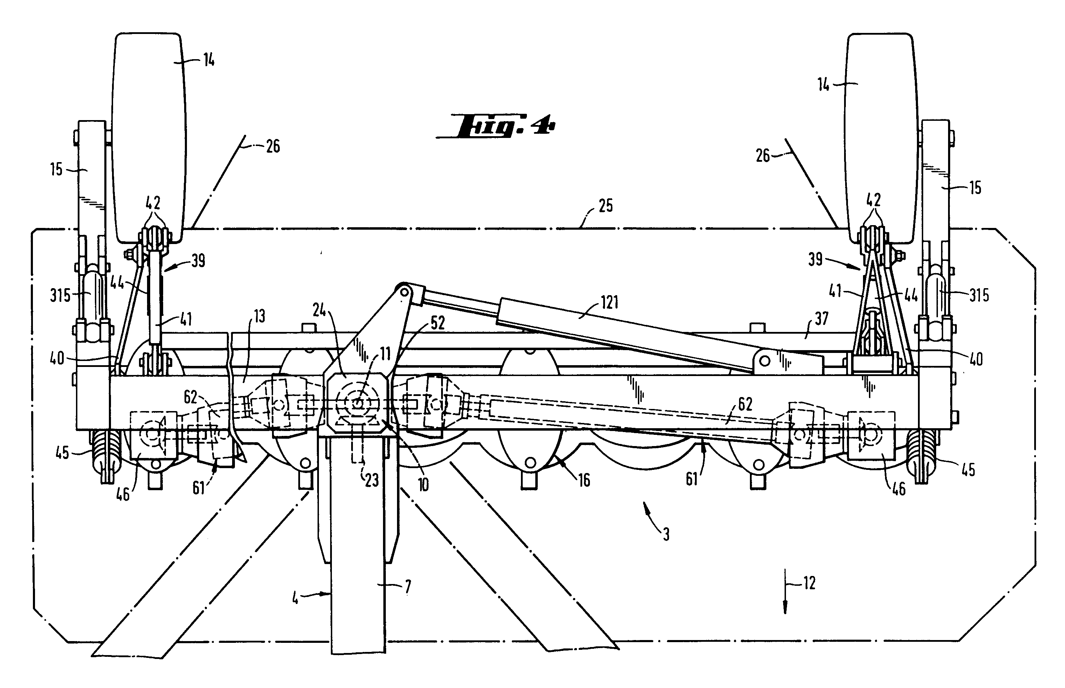

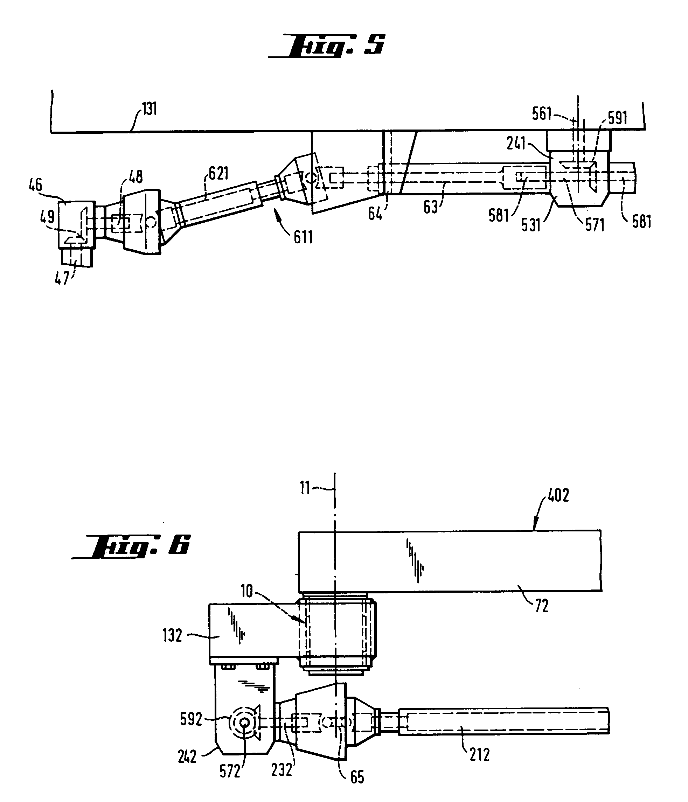

Le corps (3) de la faucheuse (1) comporte un châssis (13) qui s'appuie sur le sol au moyen de deux roues (14) qui s'étendent à l'arrière du châssis (13). Les roues (14) sont chacune liées à articulation au châssis (13) au moyen d'un bras de roue (15) de sorte à pouvoir être déplacées par rapport audit châssis (13) grâce à l'action d'un moyen de commande (315) (un vérin hydraulique dans l'exemple représenté (voir figure 3)) en vue d'éloigner le châssis (13) du sol dans la phase de transport et de rapprocher ledit châssis (13) du sol dans la phase de travail.

Le corps (3) de la faucheuse (1) comporte par ailleurs un dispositif de coupe (16) supporté par le châssis (13). Ce dispositif de coupe (16) de même que sa liaison au châssis (13) seront décrits ultérieurement plus en détail. L'entraînement du dispositif de coupe (16) est réalisé à partir de la prise de force (17) du tracteur (2) qui attaque par l'intermédiaire d'un arbre à joints universels (18) l'arbre d'entrée (19) du dispositif de liaison (8) qui est également d'une manière connue de l'homme de l'art un dispositif de transmission du mouvement. L'arbre de sortie (20) du dispositif de liaison et de transmission (8) transmet le mouvement à un arbre de transmission (21) qui est logé à l'intérieur du timon secondaire (7). Compte tenu de la grande longueur de l'arbre de transmission (21), celui-ci est guidé en rotation dans le timon secondaire (7) au moyen d'au moins un palier (22). L'arbre de transmission (21) attaque l'arbre d'entrée (23) d'un carter d'entrée (24) qui s'étend au niveau de la liaison du timon secondaire (7) au châssis (13) et qui transmet le mouvement au dispositif de coupe (16) d'une manière qui sera décrite plus en détail ci-aprés.

Sur la figure 1, on voit enfin encore que le corps (3) de la faucheuse (1) est muni d'un dispositif de protection (25) et d'organes d'andainage (26).

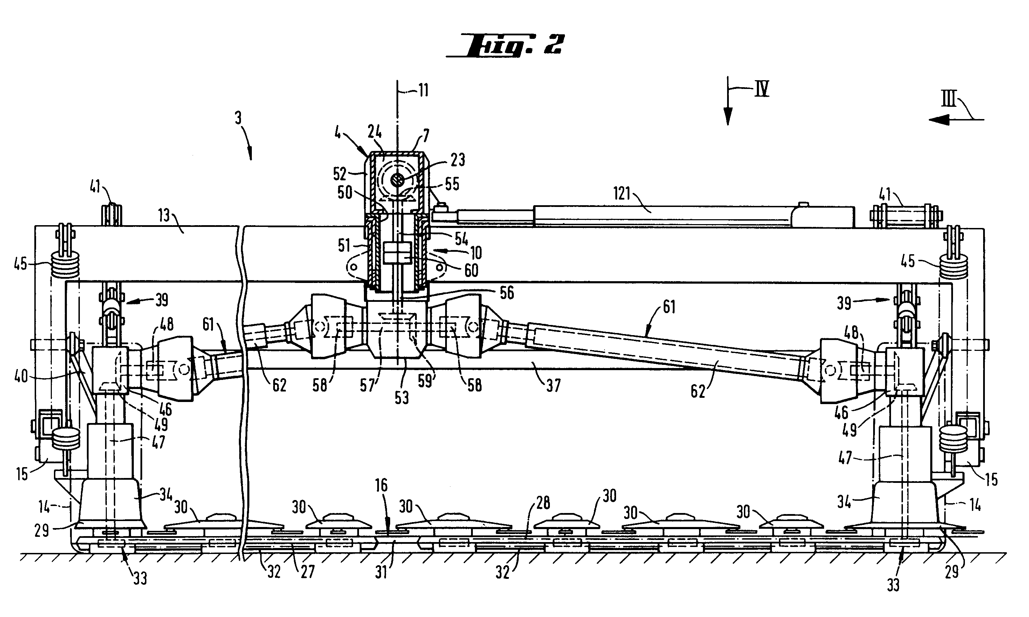

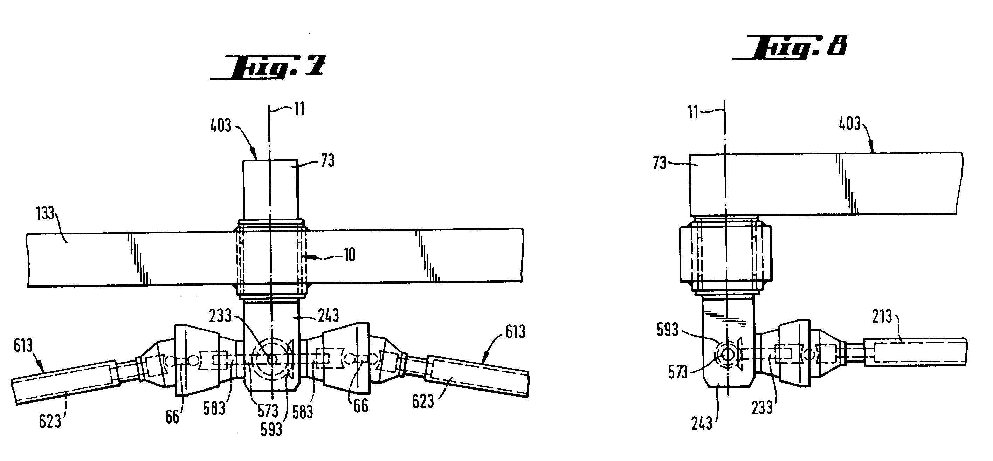

Sur les figures 2, 3 et 4, le corps (3) de la faucheuse (1) est montré plus en détail. Afin d'éviter la surcharge des figures et pour bien voir les différents organes dudit corps (3), le dispositif de protection (25) et les organes d'andainage (26) n'ont pas été représentés en détail.

Le dispositif de coupe (16) comporte deux groupes (27 ; 28) d'organes de fauchage (29, 30) qui sont liés rigidement l'un à l'autre au moyen d'un dispositif de liaison (31). Dans l'exemple représenté, les organes de fauchage (29, 30) de chaque groupe (27 ; 28) sont des disques guidés en rotation autour d'axes dirigés vers le haut dans un carter (32) correspondant qui contient une partie des organes d'entraînement (33) desdits disques. Cet agencement est connu de l'homme de l'art et ne sera donc pas décrit plus en détail. L'organe de fauchage (29) s'étendant à l'extrémité extérieure de chaque groupe (27 ; 28) est surmonté d'un tambour (34). Derrière chaque tambour (34) s'étend une paroi latérale (35) liée au groupe (27 ; 28) d'organes de fauchage respectif par un pied (36). A leur partie supérieure, les deux parois latérales (35) sont liées entre elles par un tube entretoise (37) de sorte que le dispositif de coupe (16) forme une unité bien rigide.

Ce dispositif de coupe (16) est lié au châssis (13) de manière à pouvoir s'adapter facilement aux configurations du sol en vue d'une bonne qualité de coupe. Cette liaison est réalisée par un dispositif à quadrilatère déformable (38) qui comprend deux ensembles (39), un à chaque extrémité dudit dispositif de coupe (16). Ce dispositif à quadrilatère déformable (38) (sensiblement un parallélogramme dans l'exemple représenté) est bien visible sur la figure 3. Chaque ensemble (39) comporte
- une bielle inférieure (40) liée à articulation à son extrémité avant au châssis (13) et à son extrémité arrière à la paroi latérale (35) correspondante, ladite extrémité arrière s'étendant à un niveau plus bas que ladite extrémité avant ;
- une bielle supérieure (41) s'étendant sensiblement parallèlement à la bielle inférieure (40) et liée à articulation à son extrémité avant au châssis (13) ;
- une bielle arrière (42) liée à articulation à son extrémité supérieure à l'extrémité arrière de la bielle supérieure (41) et à son extrémité inférieure à la paroi latérale (35) correspondante (l'axe de la liaison articulée de la bielle arrière (42) à la paroi latérale (35) est confondu avec l'axe de la liaison articulée de la bielle inférieure (40) à la paroi latérale (35) ; et
- une bielle avant (43) (fictive) qui est formée par la ligne de jonction (représentée en trait mixte gras) tirée entre les articulations avant liant la bielle inférieure (40) et la bielle supérieure (41) au châssis (13) (cette bielle avant (43) fictive est sensiblement parallèle à la bielle arrière (42)).

Chaque ensemble (39) est ainsi agencé de telle manière que le châssis (13) tire le dispositif de coupe (16).

Sur la figure 3, on voit encore que chaque ensemble (39) comporte un organe de réglage du piquage (44) du dispositif de coupe (16). Cet organe de réglage du piquage (44) est monté à articulation entre la paroi latérale (35) respective et la bielle arrière (42). La longueur de cet organe de réglage du piquage (44) est variable de sorte qu'en modifiant sa longueur, on modifie la position initiale du dispositif à quadrilatère déformable (38) par rapport au sol, ce qui a pour effet de modifier le piquage des organes de fauchage (29, 30).

Afin de réduire la force avec laquelle le dispositif de coupe (16) repose sur le sol pendant le travail, chaque extrémité dudit dispositif de coupe (16) est munie d'un dispositif d'allégement (45) (un ressort dans l'exemple représenté) lié d'une part au châssis (13) et d'autre part à la paroi latérale (35) correspondante.

Afin de décoller le dispositif de coupe (16) du sol pendant la mise en position de transport, il est prévu des butées (413) sur lesquelles viendront reposer les bielles inférieures (40) lorsque le châssis (13) sera éloigné du sol par les moyens de commande (315). On notera que les butées (413) ne gênent pas le débattement du dispositif à quadrilatère déformable (38) pendant le travail.

Sur la partie frontale supérieure de chaque paroi latérale (35) est également fixe un carter de renvoi (46) qui s'étend au-dessus de l'organe de fauchage extérieur (29) respectif. Le carter de renvoi (46) de chaque groupe (27 : 28) fait partie des organes d'entraînement (33) dudit groupe (27 : 28) et est lié à la partie des organes d'entraînement (33) logée dans le carter (32) correspondant au moyen d'un arbre (47) dirigé vers le bas. Cet arbre (47) s'étend à l'intérieur du tambour (34) aménagé au-dessus de l'organe de fauchage extérieur (29) correspondant. Chaque carter de renvoi (46) comporte par ailleurs un arbre d'entrée (48) qui s'étend dans l'exemple représenté transversalement à la direction de travail (12) et est dirigé vers la partie médiane du dispositif de coupe (16). A l'intérieur du carter de renvoi (46), l'arbre (47) dirigé vers le bas et l'arbre d'entrée (48) sont accouplés par un couple de roues dentées (49).

Sur les figures 2 à 4, on retrouve l'articulation (10) liant le timon secondaire (7) au corps (3) ainsi que le carter d'entrée (24). Ceux-ci sont notamment bien visibles sur la figure 2. A sa partie arrière, le timon secondaire (7) est muni d'un moyeu (50) centré sur l'axe (11) et qui s'étend vers le bas. Ce moyeu (50) est guidé en rotation dans un palier (51) également centré sur l'axe (11) et solidaire du châssis (13). Le guidage en rotation de même que la liaison axiale entre le moyeu (50) et le palier (51) n'ont pas été détaillés car ceux-ci sont à la portée de l'homme de l'art.

Le carter d'entrée (24) quant à lui, est composé de deux parties, une partie supérieure (52) solidaire du timon secondaire (7) et une partie inférieure (53) solidaire du châssis (13). La partie supérieure (52) supporte d'une part l'arbre d'entrée (23) et d'autre part un arbre de sortie intermédiaire (54). Ces deux arbres (23, 54) sont accouplés par un couple de roues dentées (55). La partie inférieure (53) quant à elle, supporte d'une part un arbre d'entrée intermédiaire (56) et d'autre part un arbre de sortie (57) ayant ses deux extrémités (58) qui sortent de ladite partie inférieure (53) et qui s'étendent sensiblement parallèlement aux arbres d'entrée (48) des carters de renvoi (46) correspondants. Les deux arbres (56, 57) sont accouplés par un couple de roues dentées (59). Par ailleurs, l'arbre de sortie intermédiaire (54) de la partie supérieure (52) et l'arbre d'entrée intermédiaire (56) de la partie inférieure (53) sont accouplés par un accouplement (60). Enfin, ces arbres intermédiaires (54 et 56) sont agencés de telle manière que leur axe de rotation respectif soit confondu avec l'axe (11) de l'articulation (10). De cette sorte, la partie supérieure (52) peut tourner avec le timon (4) par rapport à la partie inférieure (53) autour de l'axe (11) sans introduire de contraintes dans les arbres intermédiaires (54 et 56).

Le mouvement disponible à l'arbre de sortie (57) est ensuite distribué aux groupes (27, 28) d'organes de fauchage par des moyens de distribution du mouvement (61). Ces moyens de distribution (61) comportent pour chaque groupe (27, 28) d'organes de fauchage, un arbre de distribution (62) à joints universels liant l'arbre d'entrée (48) du carter de renvoi (46) d'un groupe (27, 28) à l'extrémité (58) correspondante de l'arbre de sortie (57) du carter d'entrée (24).

La figure 5 montre schématiquement un deuxième exemple de réalisation de moyens de distribution du mouvement (611). Dans cet exemple de réalisation, lesdits moyens de distribution (611) comportent pour chaque groupe (27, 28) d'organes de fauchage un arbre de prolongation (63) qui est accouplé à l'une de ses extrémités à l'extrémité (581) correspondante de l'arbre de sortie (571) du carter d'entrée (241) et qui est guidé en rotation au moins près de l'autre de ses extrémités dans un palier (64) solidaire du châssis (131). Entre cette dernière extrémité de l'arbre de prolongation (63) et l'arbre d'entrée (48) du carter de renvoi (46) correspondant s'étend l'arbre de distribution (621) à joints universels. Sur la figure 5, on voit aussi que cet arbre de prolongation (63) et l'arbre de distribution (621) à joints universels ont sensiblement la même longueur.

La figure 6 montre schématiquement un deuxième exemple de réalisation d'un carter d'entrée (242). Ce carter d'entrée (42) est fixé sur le châssis (132) et s'étend à l'arrière de l'axe (11) de l'articulation (10) liant le timon secondaire (72) au châssis (132). Ledit carter d'entrée (242) est muni d'un arbre d'entrée (232) et d'un arbre de sortie (572) qui est accouplé à l'arbre d'entrée (232) par un couple de roues dentées (592). L'arbre de transmission (212) qui transmet le mouvement depuis la partie frontale du timon (402), est accouplé à l'arbre d'entrée (232) du carter d'entrée (242) par un joint universel homocinétique (65) dont l'axe est sensiblement confondu avec l'axe (11) de l'articulation (10) qui lie le timon (402) au châssis (132). A partir de l'arbre de sortie (572) du carter d'entrée (242), le mouvement est ensuite distribué aux groupes (27, 28) d'organes de fauchage par des moyens de distribution (61 ou 611).

Les figures 7 et 8 montrent schématiquement un troisième exemple de réalisation d'un carter d'entrée (243). Ce carter d'entrée (243) est fixé au timon secondaire (73) et est muni d'un arbre d'entrée (233) et d'un arbre de sortie (573) qui est accouplé à l'arbre d'entrée (233) par un couple de roues dentée (593). L'arbre de transmission (213) qui transmet le mouvement depuis la partie frontale du timon (403), est accouplé à l'arbre d'entrée (233) du carter d'entrée (243). A partir de l'arbre de sortie (573) du carter d'entrée (243), le mouvement est distribué aux groupes (27, 28) d'organes de fauchage par des moyens de distribution du mouvement (613). Ces moyens de distribution (613) comportent pour chaque groupe (27, 28) d'organes de fauchage, un arbre de distribution (623) à joints universels. Ces arbres de distribution (623) comportent du coté où ils sont accouplés à l'arbre de sortie (573) un joint universel homocinétique (66).

Diverses modifications peuvent être apportées aux exemples de réalisation décrits ci-dessus sans qu'on ne sorte pour autant du cadre de la présente invention telle que définie par les revendications.

## Revendications

1. Faucheuse (1) comportant un châssis (13, 131, 132, 133), des roues (14) liées de manière articulée au châssis (13, 131, 132, 133) par des bras de roue (15) de manière à pouvoir être déplacées par rapport audit châssis (13, 131, 132, 133) en vue d'éloigner ou de rapprocher ledit châssis (13, 131, 132, 133) du sol, un timon (4, 402, 403) permettant d'atteler la faucheuse (1) à un véhicule tracteur (2), ledit timon (4, 402, 403) étant lié au châssis (13, 131, 132, 133) par une articulation (10) d'axe (11) dirigé vers le haut, un dispositif de coupe (16) comportant deux groupes (27, 28) d'organes de fauchage (29, 30) comportant chacun des organes de fauchage (29, 30) guidés autour d'axes dirigés vers le haut dans un carter (32) s'étendant sous lesdits organes de fauchage (29, 30) et contenant une partie des organes d'entraînement de ceux-ci, ledit dispositif de coupe e'tant lié de manière articulée au châssis (13, 131, 132, 133) en vue de son adaptation au sol, et des moyens de transmission (18, 8, 21, 211, 212, 213, 24, 241, 242, 243, 61, 611, 613) transmettant le mouvement depuis une source motrice (17) jusqu'aux organes d'entraînement (33) de chaque groupe (27, 28) d'organes de fauchage (29, 30) et comportant notamment un carter d'entrée (24, 241, 242, 243) disposé sensiblement au milieu du châssis (13, 131, 132, 133) considéré transversalement à la direction de travail (12) et des moyens de distribution du mouvement (61, 611, 613) distribuant le mouvement du carter d'entrée (24, 241, 242, 243) aux organes d'entraînement (33), caractérisée par la combinaison de moyens suivants :
- les deux groupes (27, 28) d'organes de fauchage (29, 30) sont liés rigidement l'un à l'autre ;
- le dispositif de coupe (16) est lié au châssis (13, 131, 132, 133) par un dispositif à quadrilatère déformable (38) ;
- les organes d'entraînement (33) de chaque groupe (27, 28) d'organes de fauchage (29, 30) comportent un carter de renvoi (46) s'étendant au-dessus de l'organe de fauchage (29) situé à l'extrémité extérieure du groupe (27, 28) d'organes de fauchage (29, 30) correspondant, et
- les moyens de distribution du mouvement (61, 611, 613) de chaque groupe (27, 28) d'organes de fauchage (29, 30) comportent un arbre de distribution (62, 621, 623) à joints universels amenant le mouvement au carter de renvoi (46) dudit groupe (27, 28) d'organes de fauchage (29, 30).

2. Faucheuse selon la revendication 1, caractérisée par le fait que le dispositif à quadrilatère déformable (38) est un dispositif à quadrilatère déformable tiré.

3. Faucheuse selon l'une au moins des revendications 1 ou 2, caractérisée par le fait que le dispositif à quadrilatère déformable (38) est au moins sensiblement un dispositif à parallélogramme.

4. Faucheuse selon l'une au moins des revendications 1 à 3, caractérisée par le fait que le dispositif à quadrilatère déformable (38) comporte deux ensembles (39) dont chacun s'étend dans le voisinage d'une extrémité du dispositif de coupe (16).

5. Faucheuse selon l'une au moins des revendications 1 à 4, caractérisée par le fait que d'une manière connue en soi, l'articulation (10) liant le timon (4, 402, 403) au châssis (13, 131, 132, 133) est disposée sensiblement au milieu du châssis (13, 131, 132, 133) considéré transversalement à la direction de travail (12).

6. Faucheuse selon la revendication 5, caractérisée par le fait que le timon (4, 402, 403) est muni à son extrémité arrière d'un moyeu (50) dirigé vers le bas et guidé en rotation autour de l'axe (11) de l'articulation (10) dans un palier (51) solidaire du châssis (13,132,133).

7. Faucheuse selon l'une au moins des revendications 5 ou 6, caractérisée par le fait que le carter d'entrée (24, 241) est composé de deux parties (52, 53, 531), une première partie (52) liée au timon (4) et une deuxième partie 53, 531) liée au châssis (13, 131), les deux parties (52, 53, 531) pouvant tourner l'une par rapport à l'autre autour d'un axe confondu avec l'axe (11) de l'articulation (10) liant le timon (4) au châssis (13, 131).

8. Faucheuse selon la revendication 7, caractérisée par le fait que la première partie (52) comporte un arbre de sortie intermédiaire (54) dont l'axe de rotation est sensiblement confondu avec l'axe (11) de l'articulation (10) que la deuxième partie (53, 531) comporte un arbre d'entrée intermédiaire (56) dont l'axe de rotation est également sensiblement confondu avec l'axe (11) de l'articulation (10), et que les deux arbres (54 et 56) sont accouplés par un accouplement (60).

9. Faucheuse selon l'une au moins des revendications 5 ou 6, caractérisée par le fait que les moyens de transmission comportent notamment un arbre de transmission (212), que le carter d'entrée (242) comporte un arbre d'entrée (232) et est uniquement lié au châssis (132), et que la liaison entre ledit arbre de transmission (212) et ledit arbre d'entrée (232) est réalisée par un joint universel (65) dont l'axe est sensiblement confondu avec l'axe (11) de l'articulation (10) liant le timon (402) au châssis (132).

10. Faucheuse selon la revendication 9, caractérisée par le fait que le joint universel (65) est un joint homocinétique.

11. Faucheuse selon l'une au moins des revendications 5 ou 6, caractérisée par le fait que le carter d'entrée (243) est uniquement lié au timon (403).

12. Faucheuse selon la revendication 11, caractérisée par le fait que du côté du carter d'entrée (243) chaque arbre de distribution (623) à joints universels comporte un joint homocinétique (66).

13. Faucheuse selon l'une au moins des revendications 1 à 12, caractérisée par le fait que les moyens de distribution du mouvement (611) d'un groupe (27, 28) d'organes de fauchage (29, 30) comportent en sus un arbre de prolongation (63) qui est accouplé à l'une de ses extrémités au carter d'entrée (24, 242) et qui est guidé en rotation au moins près de l'autre de ses extrémités dans un palier (64) solidaire du châssis (131, 132), l'arbre de distribution (621) à joints universels respectif s'étendant entre cette dernière extrémité de l'arbre de prolongation (63) et le carter de renvoi (46) du groupe (27, 28) d'organes de fauchage (29, 30) correspondant.

14. Faucheuse selon la revendication 13, caractérisée par le fait que l'arbre de prolongation (63) et l'arbre de distribution (621) à joints universels correspondant ont sensiblement la même longueur.

15. Faucheuse selon l'une au moins des revendications 1 à 14, caractérisée par le fait qu'elle comporte derrière le dispositif de coupe (16) des organes de traitement (26) du produit coupé.

16. Faucheuse selon la revendication 15, caractérisée par le fait que les organes de traitement du produit coupé sont des organes d'andainage (26).

## Claims

1. A mower (1) comprising a frame (13, 131, 132, 133), wheels (14) connected in an articulated manner to the frame (13, 131, 132, 133) by wheel arms (15) in such a way as to be able to be moved in relation to the said frame (13, 131, 132, 133) to move the said frame (13, 131, 132, 133) farther from or nearer to the ground, a drawbar (4, 402, 403) permitting the hitching of the mower (1) to a tractor vehicle (2), the said drawbar (4, 402, 403) being connected to the frame (13, 131, 132, 133) by an articulation (10) whose axis (11) is directed upwards, a cutting device (16) comprising two groups (27, 28) of mowing elements (29, 30) each comprising mowing elements (29, 30) guided around upwardly directed axes in a housing (32) extending under the said mowing elements (29, 30) and containing a part of the drive elements of the latter, the said cutting device being connected in an articulated manner to the frame (13, 131, 132, 133) with a view to its adaptation to the ground, and transmission means (18, 8, 21, 211, 212, 213, 24, 241, 242, 243, 61, 611, 613) transmitting the movement from a driving source (17) to the drive elements (33) of each group (27, 28) of mowing elements (29, 30) and comprising in particular an input housing (24, 241, 242, 243) located approximately in the middle of the frame (13, 131, 132, 133) considered transversely to the direction of work (12) and movement distribution means (61, 611, 613) distributing the movement of the said input housing (24, 241, 242, 243) to the drive elements (33), characterised by the combination of the following means:
- the two groups (27, 28) of mowing elements (29, 30) are rigidly connected to one another;
- the cutting device (16) is connected to the frame (13, 131, 132, 133) by a deformable quadrilateral mechanism (38);
- the drive elements (33) of each group (27, 28) of mowing elements (29, 30) comprise a housing (46) extending above the mowing element (29) located at the outer end of the corresponding group (27, 28) of mowing elements (29, 30) and
- the movement distribution means (61, 611, 613) of each group (27, 28) of mowing elements (29, 30) comprise a distribution shaft (62, 621, 623) with universal joints conducting the movement to the housing (46) of the said group (27, 28) of mowing elements (29, 30).

2. A mower in accordance with claim 1, characterised in that the deformable quadrilateral mechanism (38) is a pulled deformable quadrilateral mechanism.

3. A mower in accordance with at least one of claims 1 or 2 characterised in that the deformable quadrilateral mechanism (38) is at least approximately a parallelogram mechanism.

4. A mower in accordance with at least one of claims 1 to 3 characterised in that the deformable quadrilateral mechanism (38) comprises two assemblies (39) each of which extends in the vicinity of one end of the cutting device (16).

5. A mower in accordance with at least one of claims 1 to 4 characterised in that in a manner known per se, the articulation (10) connecting the drawbar (4, 402, 403) to the frame (13, 131, 132, 133) is located approximately in the middle of the frame (13, 131, 132, 133) considered transversely to the direction of work (12).

6. A mower in accordance with claim 5 characterised in that the drawbar (4, 402, 403) is equipped at its rear end with a hub (50) directed downwards and guided in rotation around the axis (11) of the articulation (10) in a bearing (51) solidly attached to the frame (13, 132, 133).

7. A mower in accordance with at least one of claims 5 or 6 characterised in that the input housing (24, 241) is made up of two parts (52, 53, 531), a first part (52) connected to the drawbar (4) and a second part (53, 531) connected to the frame (13, 131), the two parts (52, 53, 531) being able to turn in relation to each other around an axis coincident with the axis (11) of the articulation (10) connecting the drawbar (4) to the frame (13, 131).

8. A mower in accordance with claim 7 characterised in that the first part (52) comprises an intermediate output shaft (54) whose axis of rotation is approximately coincident with the axis (11) of the articulation (10), in that the second part (53, 531) comprises an intermediate input shaft (56) whose axis of rotation is also approximately coincident with the axis (11) of the articulation (10), and in that the two shafts (54 and 56) are joined by a coupling (60).

9. A mower in accordance with at least one of claims 5 or 6 characterised in that the transmission means comprise in particular a transmission shaft (212), in that the input housing (242) comprises an input shaft (232) and is only connected to the frame (132), and in that the connection between the said transmission shaft (212) and the said input shaft (232) is made by a universal joint (65) whose axis is approximately coincident with the axis (11) of the articulation (10) connecting the drawbar (402) to the frame (132).

10. A mower in accordance with claim 9 characterised in that the universal joint (65) is a homokinetic joint.

11. A mower in accordance with at least one of claims 5 or 6 characterised in that the input housing (243) is only connected to the drawbar (403).

12. A mower in accordance with claim 11 characterised in that beside the input housing (243) each distribution shaft (623) with universal joints comprises a homokinetic joint (66).

13. A mower in accordance with at least one of claims 1 to 12 characterised in that the movement distribution means (611) of a group (27, 28) of mowing elements (29, 30) comprise in addition an extension shaft (63) which is joined at one of its ends to the input housing (24, 242) and which is guided in rotation at least close to the other of its ends in a bearing (64) rigidly fixed to the frame (131, 132), the respective distribution shaft (621) with universal joints extending between this last end of the extension shaft (63) and the housing (46) of the corresponding group (27, 28) of mowing elements (29, 30).

14. A mower in accordance with claim 13 characterised in that the extension shaft (63) and the corresponding distribution shaft (621) with universal joints have approximately the same length.

15. A mower in accordance with at least one of claims 1 to 14 characterised in that it includes behind the cutting device (16) elements (26) for the treatment of the cut product.

16. A mower in accordance with claim 15 characterised in that the elements for the treatment of the cut product are swathing elements (26).

## Patentansprüche

1. Mähmaschine (1) mit einem Rahmen (13, 131, 132, 133), Rädern (14), die gelenkig mit dem Rahmen (13, 131, 132, 133) durch Radarme (15) derart verbunden sind, dass ihre Lage in bezug auf den Rahmen (13, 131, 132, 133) geändert werden kann, um den Rahmen (13, 131, 132, 133) vom Boden zu entfernen oder diesem zu nähern, einer Deichsel (4, 402, 403), die ermöglicht, die Mähmaschine (1) an ein Schleppfahrzeug (2) anzukuppeln, wobei die Deichsel (4, 402, 403) mit dem Rahmen (13, 131, 132, 133) durch ein Gelenk (10) mit aufrechtstehender Achse (11) verbunden ist, einer Schneidvorrichtung (16) mit zwei Gruppen (27, 28) von Mähorganen (29, 30), umfassend jeweils Mähorgane (29, 30), die um aufrechtstehende Achsen in einem unterhalb der Mähorgane (29, 30) befindlichen Gehäuse (32), das einen Teil der Antriebsorgane für sie enthält, geführt sind, welche Schneidvorrichtung im Hinblick auf ihre Anpassung an den Boden gelenkig mit dem Rahmen (13, 131, 132, 133) verbunden ist, und Transmissionsmitteln (18, 8, 21, 211, 212, 213, 24, 241, 242, 243, 61, 611, 613), die die Bewegung von einer Antriebsquelle (17) aus auf Antriebsorgane (33) jeder Gruppe (27, 28) von Mähorganen (29, 30) übertragen und insbesonders ein Eingangsgehäuse (24, 241, 242, 243), das im wesentlichen in der Mitte des Rahmens (13, 131, 132, 133), betrachtet quer zur Arbeitsvorschubrichtung (12), angeordnet ist, und Mittel (61, 611, 613) zur Bewegungsübertragung, die die Bewegung von dem Eingangsgehäuse (24, 241, 242, 243) auf die Antriebsorgane (33) übertragen, gekennzeichnet durch die Kombination folgender Mittel:
- die beiden Gruppen (27, 28) von Mähorganen (29, 30) sind starr miteinander verbunden,
- die Schneidvorrichtung (16) ist mit dem Rahmen (13, 131, 132, 133) durch eine deformierbare Gelenkviereckvorrichtung (38) verbunden,
- die Antriebsorgane (33) jeder Gruppe (27, 28) von Mähorganen (29, 30) umfassen ein Getriebegehäuse (46), das sich oberhalb des am äussersten Ende der entsprechenden Gruppe (27, 28) von Mähorganen (29, 30) befindlichen Mähorgans (29) befindet, und
- die Mittel (61, 611, 613) zur Bewegungsübertragung jeder Gruppe (27, 28) von Mähorganen (29, 30) umfassen eine Übertragungswelle (62, 621, 623) mit Kardangelenken, die die Bewegung an das Getriebegehäuse (46) der Gruppe (27, 28) von Mähorganen (29, 30) weitergibt.

2. Mähmaschine nach Anspruch 1, dadurch gekennzeichnet, dass die deformierbare Gelenkviereckvorrichtung (38) eine gezogene deformierbare Gelenkviereckvorrichtung ist.

3. Mähmaschine nach zumindest einem der Ansprüche 1 oder 2, dadurch gekennzeichnet, dass die deformierbare Gelenkviereckvorrichtung (38) zumindest im wesentlichen eine Parallelogrammvorrichtung ist.

4. Mähmaschine nach zumindest einem der Ansprüche 1 bis 3, dadurch gekennzeichnet, dass die deformierbare Gelenkviereckvorrichtung (38) zwei Einheiten (39) umfasst, die sich jeweils in der Nähe eines Endes der Schneidvorrichtung (16) befinden.

5. Mähmaschine nach zumindest einem der Ansprüche 1 bis 4, dadurch gekennzeichnet, dass sich das die Deichsel (4, 402, 403) mit dem Rahmen (13, 131, 132, 133) verbindende Gelenk (10) in an sich bekannter Weise im wesentlichen in der Mitte des Rahmens (13, 131, 132, 133), betrachtet quer zur Arbeitsvorschubrichtung (12), befindet.

6. Mähmaschine nach Anspruch 5, dadurch gekennzeichnet, dass die Deichsel (4, 402, 403) an ihrem hinteren Ende mit einer nach unten gerichteten Nabe (50) versehen ist, die um die Achse (11) des Gelenks (10) drehbar in einem Lager (51) geführt ist, das auf dem Rahmen (13, 132, 133) befestigt ist.

7. Mähmaschine nach zumindest einem der Ansprüche 5 oder 6, dadurch gekennzeichnet, dass das Eingangsgehäuse (24, 241) aus zwei Teilen (52, 53, 531) zusammengesetzt ist, wobei ein erster Teil (52) mit der Deichsel (4) und ein zweiter Teil (53, 531) mit dem Rahmen (13, 131) verbunden ist und die beiden Teile (52, 53, 531) relativ zueinander um eine Achse rotieren können, die mit der Achse (11) des die Deichsel (4) mit dem Rahmen (13, 131) verbindenden Gelenks (11) zusammenfällt.

8. Mähmaschine nach Anspruch 7, dadurch gekennzeichnet, dass der erste Teil (52) eine Zwischenausgangswelle (54) umfasst, deren Drehachse im wesentlichen mit der Achse (11) des Gelenks (10) zusammenfällt, dass der zweite Teil (53, 531) eine Zwischeneingangswelle (56) umfasst, deren Drehachse ebenfalls im wesentlichen mit der Achse (11) des Gelenks (10) zusammenfällt und dass die beiden Wellen (54 und 56) durch eine Kupplung (60) aneinandergekuppelt sind.

9. Mähmaschine nach zumindest einem der Ansprüche 5 oder 6, dadurch gekennzeichnet, dass die Transmissionsmittel insbesonders eine Transmissionswelle (212) umfassen, dass das Eingangsgehäuse (242) eine Eingangswelle (232) enthält und ausschliesslich mit dem Rahmen (132) verbunden ist und dass die Verbindung zwischen der Transmissionswelle (212) und der Eingangswelle (232) durch ein Kardangelenk (65) verwirklicht ist, dessen Achse im wesentlichen mit der Achse (11) des die Deichsel (402) mit dem Rahmen (132) verbindenden Gelenks (10) zusammenfällt.

10. Mähmaschine nach Anspruch 9, dadurch gekennzeichnet, dass das Kardangelenk (65) ein homokinetisches Gelenk ist.

11. Mähmaschine nach zumindest einem der Ansprüche 5 oder 6, dadurch gekennzeichnet, dass das Eingangsgehäuse (243) ausschliesslich mit der Deichsel (403) verbunden ist.

12. Mähmaschine nach Anspruch 11, dadurch gekennzeichnet, dass jede Übertragungswelle (623) mit Kardangelenken auf der Seite des Eingangsgehäuses (243) ein homokinetisches Gelenk (66) aufweist.

13. Mähmaschine nach zumindest einem der Ansprüche 1 bis 12, dadurch gekennzeichnet, dass die Bewegungsübertragungsmittel (611) einer Gruppe (27, 28) von Mähorganen (29, 30) ausserdem eine Verlängerungswelle (63) umfassen, die an einem ihrer Enden an das Eingangsgehäuse (24, 242) gekuppelt ist und die zumindest nahe ihrem anderen Ende in einem Lager (64) drehbar geführt ist, das auf dem Rahmen (131, 132) befestigt ist, wobei sich die betreffende Übertragungswelle (621) mit Kardangelenken zwischen diesem letzteren Ende der Verlängerungswelle (63) und dem Getriebegehäuse (46) der entsprechenden Gruppe (27, 28) von Mähorganen (29, 30) befindet.

14. Mähmaschine nach Anspruch 13, dadurch gekennzeichnet, dass die Verlängerungswelle (63) und die entsprechende Übertragungswelle (621) mit Kardangelenken im wesentlichen die gleiche Länge haben.

15. Mähmaschine nach zumindest einem der Ansprüche 1 bis 14, dadurch gekennzeichnet, dass sie hinter der Schneidvorrichtung (16) Organe (26) zur Behandlung des Schnittguts aufweist.

16. Mähmaschine nach Anspruch 15, dadurch gekennzeichnet, dass die Organe zur Behandlung des Schnittguts Schwadlegeorgane (26) sind.
